# EUROPEAN PATENT APPLICATION

(11) **EP 2 463 786 A1**
(43) Date of publication of application: **13.06.2012**
(21) Application number: 10306401.0
(22) Date of filing: 13.12.2010
(51) Int. Cl.: G06F 17/30, H04N 5/445

(54) **Method for displaying graphical signatures of users in a menu, and related terminals**

(71) Applicant: Thomson Licensing, 92130 Issy-les-Moulineaux (FR)
(72) Inventor: Esselimani, Amina, 85300 Challans (FR); Babon, Frédéric, 35510, CESSON SEVIGNE (FR); Gallardo, Patrick, 35140, Vendel (FR); Langlois, Tristan, 35510, CESSON SEVIGNE (FR)
(74) Representative: Thies, Stephan

(57) **Abstract**

The present invention concerns a method for displaying a menu displaying graphical signatures of users and the terminal related. The method comprises a first step of displaying of a first menu presenting a plurality of documents on the screen of a terminal. The first menu is split in a plurality of areas, each document being identified by a graphical identifier placed in an area according to attribute values associated with this document. Commands are inputted by a user for selecting a plurality of documents at the level of the terminal, the plurality of selected documents being reputed to be representative of the user's preference. The method comprise also a subsequent step of displaying in a second menu of a plurality of graphical signatures each one being associated with an user, each graphical signature being formed by a bar of zones each one having a specific graphical distinction, the size of each zone depending on the number of documents selected into a determined area of the first menu, the appearing order of each zones in the bars being the same for all the displayed graphical signature.

## Description

### FIELD OF THE INVENTION

The present invention relates to method for comparing graphical signature corresponding to several user profiles and a device implementing the method.

### BACKGROUND

As the number of information and content available to users has increased, along with the diversity of the content available such as text, music, video programming, and other multimedia rich content, it has become increasingly challenging for users to identify, order and sort contents of interest. The preferences of a user may be defined by a user profile that may be created with several manners. According to a very simple manner, the user manually introduces his profiles by selecting items in a list of items such as : themes, topics, age, etc.

More recently, such content lists or guides have become available in a numeric format, for example, electronic program guides (EPGs) for television. Like printed television program guides, EPGs may be like a digital cable program guide containing grids listing the available television programs by attributes such as time and date, channel, topic and title. The attributes associated to channels or programs are extracted by the television receiver in service information tables transmitted in the broadcast channels. The user sees the proposed programs and selects one corresponding to his preference. As selections proceed, the EPG may analyze the different selected programs, extract their attributes and store them. After a number of selections, the EPG may recognize the kind of programs usually selected by the user and propose, among the current available channels, programs which have the same attributes as the usually selected programs. With this manner, the television receiver matches the recorded user preferences with received program data, such as an EPG, to make recommendations custom made for each particular user.

At the present time, the television receivers are also connected to a network, such as Internet, allowing communication with other users. Numerous forums exist so the different users chat and exchange their comments about any subject or topic. The television receivers send the identity of the current viewed program to a server and, at the request of the user, the server connects users that are viewing the same program and propose them a discussion.

But, the fact that two users are viewing the same program, does not imply that they have the same preference. A need therefore exists for a method and system for displaying user preferences and user profile in a more efficient manner. A further need exists for a method and system for comparing the user preferences and user profile in a manner that permits a user to efficiently choice another user for a call or a discussion.

### SUMMARY

Accordingly, it is an object of the invention to provide a more reliable and efficient method for establishing a user profile and preference, and to present the different user profile and preference in order to choice other users according to their preference

The subject of the invention is a method of displaying of graphical signature representative of the preferences of a plurality of users ; characterized in that it comprises the steps of:
- on the display screen of a terminal, preliminary displaying of a first menu representing a plurality of documents by corresponding graphical identifiers, the first menu being split in a plurality of areas, each document of said plurality being identified by a graphical identifier which is displayed in an area of the first menu which depends on attribute values associated with this document,
- by each user of said plurality of users, inputting of commands of selection of at least one document at the level of the terminal, the selected document(s) being reputed to be representative of the user's preference,
- on the display screen, subsequent displaying in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in the bars is the same for all the displayed graphical signatures.

In this way, the single manner of determining and displaying of each graphical signature in the same menu allows an easy comparison between the different displayed signatures. At a glance, a user may see the similarities and the differences of the user profiles associated with each signature, thus optimizing the search of user interested by the same things.

According to a first improvement, one displayed graphical signature is determined from the selection of documents selected by the terminal's user, this signature being graphically highlighted. Further to this aspect, the user can compare his own signature with signatures of other people. According to another improvement, the appearing order of the zones in the graphical signature depends on the numbers of documents selected by the terminal's user in each area, the zones representing the most numerous selected document being at the first place.

According to one aspect, the method comprises a step of displaying a similarity value between the graphical signature of the terminal's user and the graphical signature of the other users. With this manner, the user may easily know the users having the same preference.

According to another aspect, the identifiers in each areas of the first menu appear with the same graphical distinction as the corresponding zone in the bar. According to another aspect, the method comprises a step of inputting of commands for moving the graphic signatures displayed in the second menu.

According to another aspect, the displayed bars are formed with tridimensional zones, the depth of each zone depending on the number of documents selected into the corresponding area of the first menu. According to another aspect, the displayed graphical signatures are determined from several pluralities of documents selected by the same user at different times.

Another subject of the invention is an electronic device comprising a means of generating of a display signal of a first menu representing a plurality of documents by corresponding graphical identifiers, the first menu being split in a plurality of areas, each document of said plurality being identified by a graphical identifier which is displayed in an area of the first menu which depends on attribute values associated with this document,
and a means of inputting of commands enabling the selection by a user of at least one document, the selected document(s) being reputed to be representative of the user's preference,
the means of generating of a display signal displaying in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in the bars is the same for all the displayed graphical signatures.

### BRIEF DESCRIPTION OF THE DRAWINGS

Other characteristics and advantages of the invention will now become apparent with more details in the context of the description which follows of exemplary embodiments given by way of illustration by referring to the appended figures as listed below, where:
- figure 1 shows a block diagram of an audiovisual terminal for implementing an exemplary embodiment of the invention,
- figure 2 shows a flow chart showing a process for selecting users and displaying their graphical signatures according to one exemplary embodiment of the invention,
- figure 3 shows a first example of menu for the selection of a plurality of documents,
- figure 4 shows a second example of menu for the selection of a plurality of documents,
- figure 5 shows an example of menu displaying a determined number of selected documents,
- figure 6 shows an example of a graphical signature of a user,
- figure 7 shows a menu allowing the comparison of several graphical signatures, according to one exemplary embodiment of the invention.

### DESCRIPTION

The present invention will be illustrated below in conjunction with exemplary displayed menus and displaying devices. The present invention provides, among other features, a terminal equipped with a browsing application and means for selecting at least one other user according to theirs preferences.

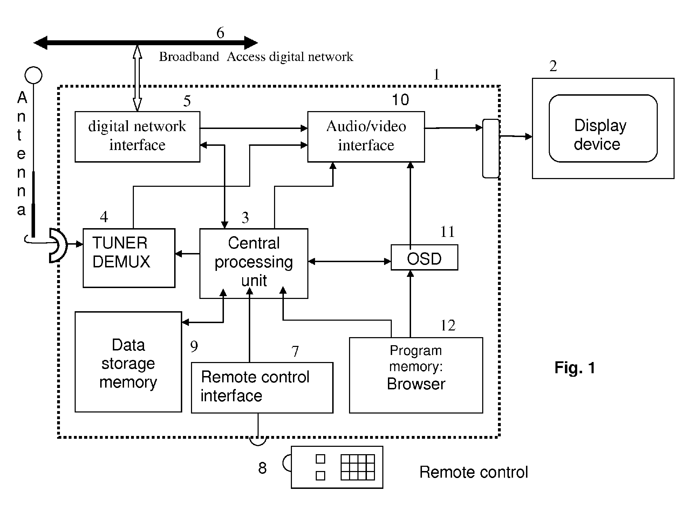

In reference to figure 1, the operation of an audiovisual terminal 1 connected to a television display device 2 having a display screen will first of all be described. The audiovisual terminal 1, for example a decoder, comprises a central processing unit 3 linked to a program memory 12, reception means such as a demodulator 4 and a demultiplexer for receiving audio/video data from a transmission network via a receiving antenna. The terminal 1 is preferably of digital type and receives digital audiovisual services, but the invention may also be used in an analogue-type terminal receiving channels transmitted by microwave channels. As a variant, the terminal 1 may be provided with an interface 5 for communication with a broadband access digital network 6 making it possible to transmit audio/video documents in real time and attributes values characterizing the audio/video documents. This network is, for example, the Internet. The terminal 1 also comprises an infrared signal remote control interface 7 for receiving signals from a remote control 8, a data storage memory 9 for storing received document and service data, and an audio/video decoding logic 10 for generating audiovisual signals sent to the television display device 2. The remote control 8 is provided with direction keys: ↑, ↓, →, ← and with the key: "OK" whose roles will be explained later.

The audiovisual terminal 1 also comprises an audio/video interface circuit 10 for directly displaying onto the display screen the audiovisual transmissions received from the transmission network via the receiving antenna or from the broadband access digital network 6, and a data embedding circuit 11, often called OSD circuit, standing for "On-Screen Display". The OSD circuit 11 is a text and graphics generator which makes it possible to display on the display screen menus, pictograms (for example, a number corresponding to the channel being viewed) and images, and which makes it possible to display the different display screens according to the present invention. The OSD circuit is controlled by the central processing unit 3 and a browser application contained in the memory 12. This application is either resident in a ROM memory, or downloaded and saved in a writable memory. A variant involves having a mosaic application produced in the form of an ASIC-type custom circuit for example.

The multimedia documents that the terminal 1 may receive and send to the display device for reproduction are audiovisual documents, audio documents, or photos. The broadband access digital network 6 transmits to terminal 1 data comprising multimedia documents and descriptive documents of these documents. The descriptive data, also called "metadata" comprise the attributes of multimedia documents accessible via this broadband access digital network 6. They are stored in the database of the memory 9 of the terminal 1 and are continually updated when there are new receptions.

In the example that follows, the multimedia documents are classed according to different criteria, hereafter are examples of classification criteria and their associated attribute values enabling classification of the documents in the lists:
- Language: English, French, German, Italian, Arab, other
- Theme : film, news, documentary, sport, game/show.

Second level of theme (associated sub-attribute) : sub-theme:
● film: {adventure, drama, erotic, crime, fiction, other}
● news: { TV news, radio, weather, markets, sport, other}
● documentary: { general, nature, culture, social, history}
● game/show : { general, variety, circus, Talk Show, theatre}
● sport: { General, football, tennis, basketball, athletics, nautical}
● ...
   - Source: TPS, Canal Satellite, DVD, video, Web.
   - Morality: 0 (general public),1,....,3 (pornographic).
   - Media: audio, video, image, text,
   - Age of the document, measured for example by its creation date.

These criteria enable the classification of multimedia documents available from terminal 1 and the creation of lists by selecting one or more criteria, these lists may be ordered.

The classification of each multimedia document is made according to the attributes associated with each classification criterion. Some attributes are digital in nature (the criterion of morality, document seniority, etc.). Being rigorous, it is possible to assign a digital value to each attribute by a convention. For example, each theme attribute of a film is associated with the following values: "adventure" is assigned the value 1, "drama" is assigned the value 2, "erotic" is assigned the value 3, "crime" is assigned the value 4, etc. Advantageously, the assignment of a value is carried out by the broadcaster. The attribute values (digital values or not) that are assigned to them, are used for defining the location of the identifiers associated to each document displayed in a menu. Audiovisual documents are examples of elements used for navigation, but any other element (audio document, picture, book, ..) that may be represented by an identifier on a screen and be associated with a classification criterion may be used by the present invention.

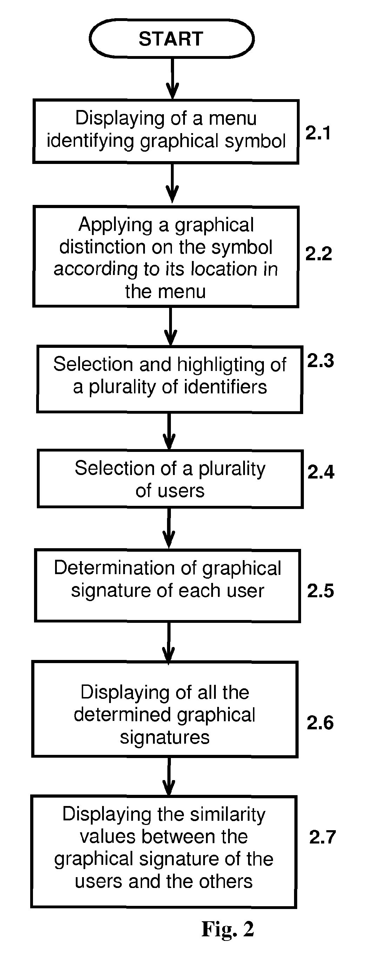

The steps of a preferred embodiment of the invention will now be described with the help of figure 2. According to a preferred embodiment, a menu showing the identifier of selectable documents is displayed (step 2.1). The browser then extracts the values of the attributes stored in the database and processes it to produce the navigation menus displayed on the display device 2 and proposed to the user. The coordinates of each identifier points identifying each document in a multidimensional space are obtained on the basis of the attributes values. The space containing these points possesses two dimensions if the menu is displayed on a standard two-dimensional display screen or possesses three dimensions if the menu is displayed on a three-dimensional display screen.

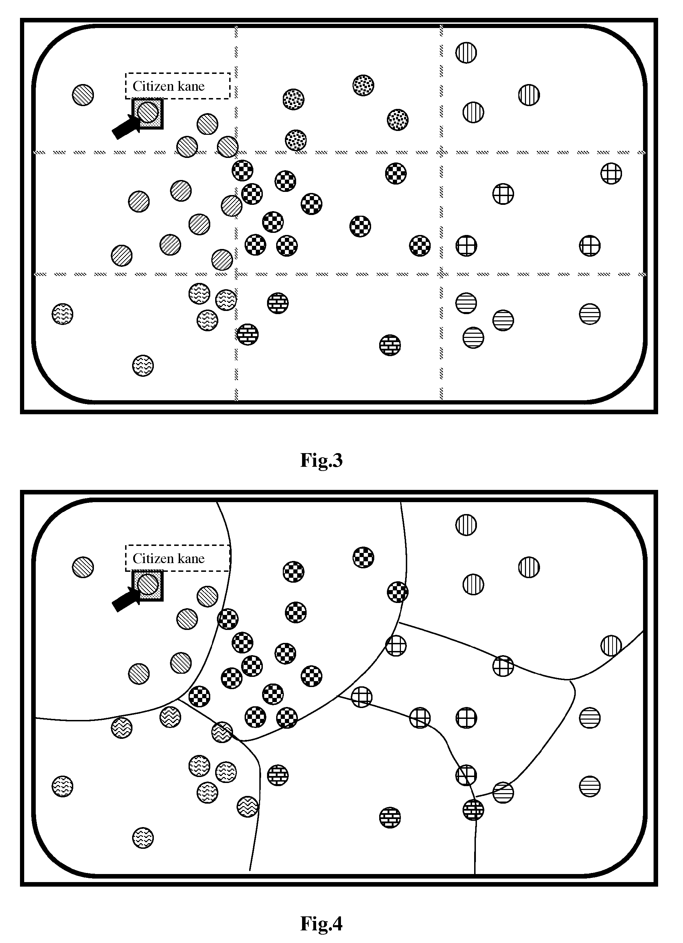

According to the present exemplary embodiment, Figure 3 represents a two-dimensional browsing menu. The coordinates (xi, yi) of each point are obtained by projecting the point Pi onto a space of dimension 2. The projection is determined by principal component analysis or PCA. PCA is described in particular in the Saporta document 1990, entitled "Probabilités Analyse de données et statistiques, Edition Technip." [in English : "Probabilities data analysis and statistics, published by Technip"]. This well-known data analysis algorithm seeks to discover a subsystem of axes that is linearly tied to the original which best "spreads" the samples, these axes tend to merge the correlated original axes. The same example may be applied to a space of dimension 3, using a projection in such a space.

The present invention also provides an application for browsing among graphical user signatures and for selecting a user with comparing the user signatures. The figure 2 shows a flow chart showing a process for selecting users and displaying their graphical signatures according to one exemplary embodiment of the invention.

The step of displaying 2.1 the menu of browsing consisting in projecting the points onto a one-, two- or three-dimensional space makes it possible to create a graphical representation of the collection of documents accessible from the device 1. A graphical representation such as this constitutes together with a keypad a user interface making it possible to select any point whatsoever within a group. To do this, the user may jump from one point to another by indicating a direction of navigation with the aid of the direction keys. Another manner for selecting an identifier consists in moving a cursor to put it on the selected identifier, a mouse controlling the moving of the cursor. An example of a cursor is displayed by an arrow in the menu of the figure 3. When the cursor is located on an identifier, a window appears to show the title of the document, or other information relative to this document, such as : the date of creation, the type, the name of the producer.

In step 2.2, the browser splits the displayed menu into several areas defining several groups of documents. Depending on whether a document is a member of one or another group, the identifier associated with this document has a graphical distinction such as certain shape (as shown in Figure 3), or of a certain colour, or of a particular underlining, or of a frequency of flashing or any other distinctive graphical characteristic. According to the exemplary embodiment shown by the Figure 3, the browsing menu is split into determined areas, the belonging of a group depends on the location of the identifier in a determined area. According to the example of the figure 3, the browsing menu is divided in nine areas with regular geometric shape. Each area has the same surface area. The identifiers in a determined area appear with the same specific graphical distinction. Many regular geometric shapes for splitting are possible, such as rectangular, triangular, trapezoidal, etc . According to an improvement, the number of the identifiers in each area is the same, at one unit plus or minus.

Another way to split the browsing menu consists in taking the values of a determined classification criterion which is shared by all the documents. The figure 4 shows a new manner of splitting. The locations of each identifier are identical as those of the figure 3 but the determined areas have not a geometry splitting. According to the example of the figure 4, six theme values are selected by the browser. The shapes of each identifier depend on the theme value of the document associated with this identifier. According to an improvement, in a configuration step, the browser proposes several input commands, so that the user may select the manner of splitting that he wishes.

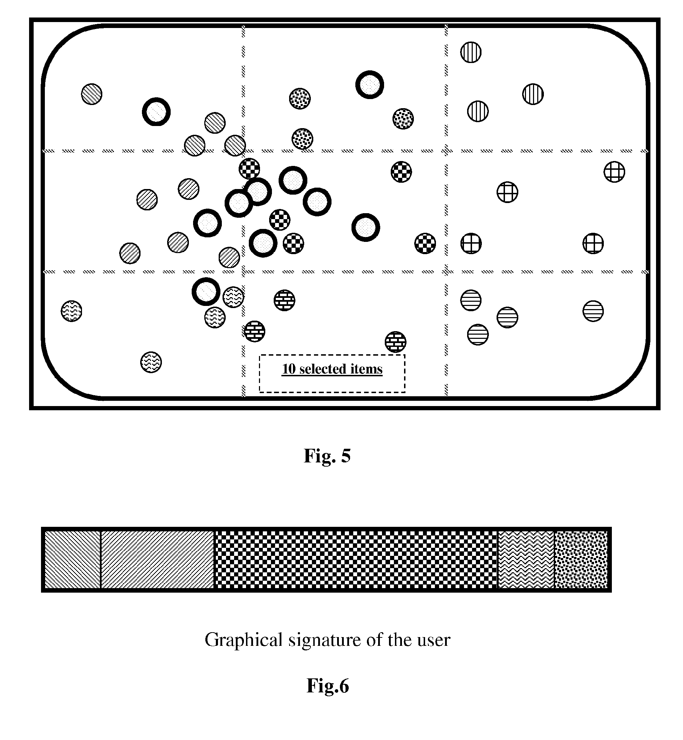

In step 2.3, the user successively selects a plurality of documents according to his preference. When the cursor is placed on an identifier, the name of the associated document is displayed. The figure 3 shows that the user selects the document "Citizen Kane". When the user inputs on the key "OK" of the remote control or the keyboard, this document is selected and the corresponding identifier is highlighted. The figure 5 shows a browsing menu with ten highlighted identifiers corresponding to the previously selected documents. According to a preferred embodiment, the highlight consists in a thick surround. A textual window in the menu presents the number of the current selected identifiers. The user may deselect a document by selecting again the identifier and input on a specific key.

At a certain time, the user wishes to compare his preferences with others profiles of other users. With this manner, the user may find one or several users having similar profiles, or at the opposite, other users having completely different profiles. To do that, the browser displays different graphical signatures associated with other users. In step 2.4, the browser allows selection of a plurality of users. With this manner, the user may make a first selection among a great number of users. For example, the user may select the people of a determined region or city, or the people connected since the last ten days.

In step 2.5, the browser determines the graphical signatures of the users according to the set of selected documents selected by each user. We may consider that the selected documents represent the preferred document and the attributes of these documents correspond to the user profile. Since the locations of the identifier of the selected documents depend on a determined number of attribute values, the number of documents selected in each area is representative of the preferences of the user. The graphical signature is reached with the sum of numbers of selected document in each area.

In step 2.6, according to a preferred embodiment, the browser displays a menu for comparing a plurality of graphical signatures. Each displayed signature is determined from the selection of documents selected by its associated user during the step 2.3. Each graphical signature of a user is displayed as a graphic bar which is split as many zones as there are areas of the first menu having selected documents. The order of the appearance of graphical distinctions in each bar is the same for all the displayed graphical signatures so that the user may easily compare the different displayed bar and determine the similarities between the graphical signatures. Advantageously, the appearing order of the zones in the graphical signature depends on the numbers of documents selected by the terminal's user in each area. For example, the zones representing the most numerous selected document are at the first place, in the left side of the bar. With this manner, the most often used preference is placed in first so that the comparison makes easier.

Advantageously, the graphical distinction for a zone of the bar and the graphical distinction applied on the identifiers associated with the corresponding selected documents are the same. The size of the zone depends on the number of selected identifiers that have this graphical distinction. For example, if a user selects ten documents and three in the same area, a zone corresponding to 30% of the graphic bar is displayed with this graphical distinction. The figure 6 shows an example of displayed graphical signature, corresponding to the selection of documents presented in the figure 5. The graphical signature contains 5 zones, the first corresponding to one selected document in an area, the second: two documents, the third: five documents, the fourth and the fifth: one document.

Advantageously, the menu of displaying the graphical signature is represented in a three-dimensional space. The different zones of the bars present a third dimension : the depth which may be used to indicate a parameter. For example, the depth value of each zone of the bar depends on the number of documents selected into the corresponding area of the first menu.

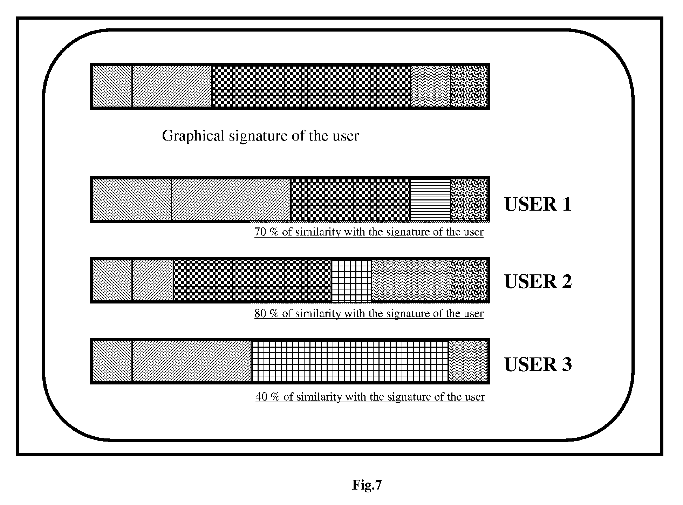

The figure 7 shows a menu allowing an easy comparison of several displayed graphical signatures. The user may in a glance make the visual comparison between the signature and determine the similar signatures. Advantageously, the signatures are located the ones underneath the others for a better comparison. The order of zones is the same for each displayed signatures. The figure 7 shows a menu allowing an easy comparison of several displayed graphical signatures. The user may in a glance makes the visual comparison between the signatures and determine the similar signatures.

According to an improvement, in step 2.7, the browser displays a similarity value between the graphical signatures of the user's terminal and the other users. This improvement may help the user to compare the different graphical signatures and to select one. According to an example of embodiment of this improvement, the browser displays the percentage of the surface area of the graphical signatures of the user's terminal and each other users that have the same graphical distinction. By seeing the figure 7, the user may see that the 70 % of the whole surface graphic bar has the same graphical distinctions between the user of the terminal 1 and the user 1, 80 % between the user of the terminal 1 and the user 2, and 40 % between the user of the terminal 1 and the user 3. It is important to note that the percentage is calculated according to surface of the bars, and not according to the number of documents selected by each user.

According to an improvement, the signature of the user of the terminal 1 is always displayed, preferably at the top of the menu. Commands for moving the location of the displayed signatures are available for a best comparison between the signature of the user and the others displayed signatures. When the user finds an interesting signature, he may select it and calls the corresponding user with its address transmitted by the network. According to improvement, the name of the others users are never displayed in the menu. With this manner, the call and the subsequent discussions with a selected user are anonymous.

According to an improvement, during a long period, the user's terminal may select several time a plurality of documents. According to the time, the user's preference may move and change to other kind of films, music, book, etc. It could be interesting that the user can see the moving of his preference according to the time. To do that, the terminal stores the different selection and indexes them by time. The menu of the figure 7 can be adapted to display all or part of the user's signatures stored in the terminal. The menu displays the same name of user with specifying the date of the creation of the signature.

It is important to note that the user interface that has been described may be used in any multimedia terminal given that the terminal has sufficiently powerful video capacity to enable a user to view on screen menus.

## Claims

1. Method of displaying of graphical signature representative of the preferences of a plurality of users ; **characterized in that** it comprises the steps of:
- on the display screen (2) of a terminal (1), preliminary displaying (2.1) of a first menu representing a plurality of documents by corresponding graphical identifiers, the first menu being split in a plurality of areas, each document of said plurality being identified by a graphical identifier which is displayed in an area of the first menu which depends on attribute values associated with this document,
- by each user of said plurality of users, inputting of commands of selection (2.3) of at least one document at the level of the terminal (1), the selected document(s) being reputed to be representative of the user's preference,
- on the display screen (2), subsequent displaying (2.6) in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in a bar is the same for all the displayed graphical signatures.

2. Method of displaying graphical signatures according to claim 1, **characterized in that** said inputting of commands of selection (2.3) of a document is performed by graphically highlighting the graphical identifier identifying said selected document.

3. Method of displaying graphical signatures according to claim 1 or 2, **characterized in that** the appearing order of the zones in the bar form ing each graphical signature depends on the numbers of documents selected by the terminal's user in each area, the zones representing the most numerous selected document being at the first place.

4. Method of displaying graphical signatures according to claims 2 or 3, **characterized in that** it comprises a step of displaying (2.7) a similarity value between the graphical signature of the terminal's user and the graphical signature of the other users.

5. Method of displaying graphical signatures according to any one of the preceding claims, **characterized in that** the identifiers in each areas of the first menu appear with the same graphical distinction as the corresponding zone in the bar

6. Method of displaying graphical signatures according to any one of the preceding claims, **characterized in that** it comprises a step of inputting of commands for moving the graphic signatures displayed in the second menu.

7. Method of displaying graphical signatures according to any one of the preceding claims, **characterized in that** the displayed bars are formed with tridimensional zones, the depth of each zone depending on the number of documents selected into the corresponding area of the first menu.

8. Method of displaying graphical signatures according to any one of the preceding claims, **characterized in that** the displayed graphical signatures are determined from several pluralities of documents selected by the same user at different times.

9. Electronic device (1) comprising a means of generating of a display signal (3, 10) of a first menu representing a plurality of documents by corresponding graphical identifiers, the first menu being split in a plurality of areas, each document of said plurality being identified by a graphical identifier which is displayed in an area of the first menu which depends on attribute values associated with this document,
and a means of inputting of commands (7, 8) enabling the selection by a user of at least one document, the selected document(s) being reputed to be representative of the user's preference
the means of generating of a display signal (3,10) displaying in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in the bars is the same for all the displayed graphical signatures.
